# EUROPEAN PATENT APPLICATION

(11) **EP 2 169 908 A1**
(43) Date of publication of application: **31.03.2010**
(21) Application number: 09252328.1
(22) Date of filing: 30.09.2009
(51) Int. Cl.: H04L 29/08, G06F 21/00, G06F 9/445

(54) **Protected network boot of operating system**

(30) Priority: 30.09.2008 US 241259
(71) Applicant: Intel Corporation, Santa Clara, CA 95052 (US)
(72) Inventor: Grobman, Steve, El Dorado Hills CA 95762 (US); Klotz, Carl, Beaverton OR 97006 (US); Smith, Ned, Beaverton OR 97006 (US)
(74) Representative: Beresford, Keith Denis Lewis

(57) **Abstract**

Methods and apparatus are disclosed to protect an operating system booted by a client computing device and provided by a server computing device. One such method includes requesting a trusted platform module of the client computing device to unseal a seated encryption key, and receiving an encrypted operating system via a network in response to initiating a boot process of the client computing device. The illustrative method also includes decrypting the encrypted operating system received via the network using an unsealed encryption key obtained in response to requesting the trusted platform module to unseal the sealed encryption key, and executing the decrypted operating system.

## Description

### BACKGROUND

Operating system streaming is an emerging trend with significant industry momentum. In operating system streaming, a server sends an operating system to a client over the network, but streams the operating system in such a way that the client may start executing the operating system very quickly by determining what data is required first. One of the benefits of a streamed operating system implementation is that no data is stored locally, so when the machine is powered off, there is no data persisted.

Security attacks that target some of the early boot portions of a standard platform such as the boot loader generally do not affect a streamed operating system since there is no drive and those portions of the operating system image may be well guarded when stored on the server. However, early boot attack points may shift to other portions of the platform and new attack methodologies may come into play because the operating system is able to run on multiple platforms, which means a rogue remote client gaining access to the operating system may pose a threat.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 shows an embodiment of a network environment in which a client computing device may boot an operating system provided by the server computing device.
FIG. 2 shows an embodiment of client computing device of FIG. 1.
FIG. 3 shows an embodiment of a method to verify integrity of an entity and to extend trust to the verified entity.
FIG. 4 shows a timeline of an embodiment of a method to boot an operating system over a network.

### DETAILED DESCRIPTION OF THE DRAWINGS

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

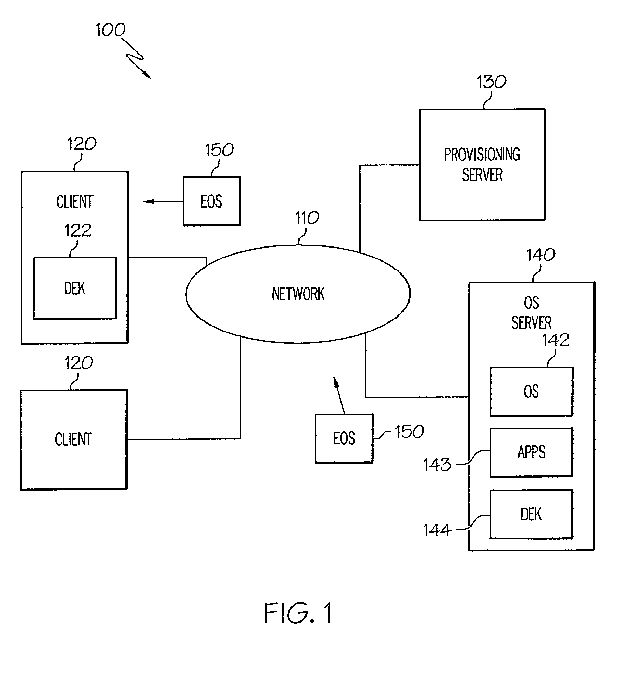

FIG. 1 show an embodiment of network environment 100 that supports protected booting of an operating system over a network. As shown, the network environment 100 may include a network 110 to which are operatively coupled one or more client computing devices or clients 120, a provisioning server 130, and an operating system (OS) server 140 having a one or more operating systems 142 and applications 143. The network 110 may comprise one or more wired and/or wireless networks that may include routers, gateways, repeaters, bridges, wireless access pointes, servers, and/or other networking devices that cooperate to operatively couple computing devices to one another.

The clients 120 may include computing devices from one or more form factors such as, for example, a server computing device, a desktop computing device, a laptop computing device, a personal digital assistant (PDA), and/or other computing devices. The provisioning server 130 may distribute keys and policies to the clients 120 and the OS server 140. In particular, the provisioning server 130 may provide a unique data encryption key 122 to each client 120 and a corresponding data encryption key 144 to the OS server 140 for each client 120.

In response to a system boot event (e.g. a power-on event, a system reset event, etc.), a client 120 may authenticate with the OS server 140 and request the OS server 140 for an operating system to boot. In response to the request, the OS server 140 may encrypt an operating system 142 using the data encryption key 144 associated with the requesting client 120 and stream the encrypted operating system (EOS) 150 to the requesting client 120. The client 120 in turn may decrypt the encrypted operating system 150 using the data decryption key 122 provided by the provisioning server 130 and may execute the operating system 142 upon successfully decrypting the received encrypted operating system 150.

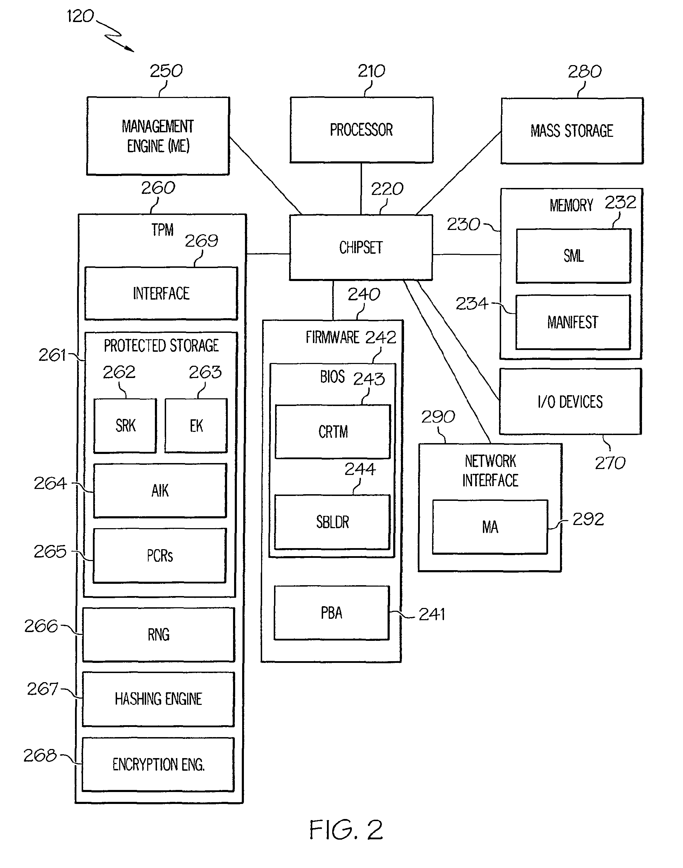

Referring now FIG. 2, an embodiment of a client 120 is shown in further detail. As shown, the client 120 may include a processor 210, a chipset 220, system memory 230, and a firmware device 240. The client 120 may further include a management engine (ME) 250, a trusted platform module (TPM) 260, I/O devices 270, a mass storage device 280, and a network interface controller 290.

The processor 210 may comprise one or more Intel™ microprocessors from the Pentium™ family, the Itanium™ family, the XScale™ family, or the Centrino™ family. Of course, other processors from other families and/or other manufacturers may also be used. Moreover, the processor 210 may include one or more processing cores that include support for protected virtualization modes such as, for example, the protected virtualization mode (VMX) specified by LaGrande Technology (LT) and/or Trusted execution Technology (TXT) developed by Intel Corporation.

The chipset 220 may include one or more controllers to control one or more components of the client 120. For example, the chipset 220 may include a memory controller to provide an interface between the processor 210 and the system memory 230. In some embodiments, the memory controller may be integrated into the processor 210 instead of the chipset 220. The chipset 220 may also include one or more massage storage device interface controllers such as, for example, a Parallel At Attachment (ATA) interface controller, a Serial ATA interface controller, and/or Small Computer System Interface (SCSI) controller IDE to interface the mass storage device 280. The chipset 220 may also include a graphics controller, Universal Serial Bus (USB) controller, Peripheral Component Interconnection (PCI) Express controllers, audio controllers, keyboard controllers and the like in order to controller corresponding I/O devices 270 and other components of the client 120 such as the management engine 250 and the TPM 260. The chipset 220 may also provide other platform supporting hardware such one or more Direct Memory Access (DMA) controllers, an interrupt controller, and a real time clock.

The system memory 230 may store data and instructions to be processed and executed by the processor 210, management engine 250, and/or TPM 260. The system memory 230 may comprise various types of volatile and/or non-volatile memory. For example, system memory 230 may include volatile memory such as Synchronous Dynamic Random Access Memory (SDRAM) devices, Dynamic Random Access Memory (DRAM) devices, RAMBUS Dynamic Random Access Memory (RDRAM) devices, and/or other volatile memory devices. Further, the system memory 230 may include non-volatile memory devices such as, for example, flash memory devices, read only memory (ROM) devices, Electrical Erasable Programmable ROM (EEPROM) devices, battery backed RAM devices, and/or other non-volatile memory devices.

The firmware device 240 may include non-volatile memory devices such as, for example, flash memory devices, read only memory (ROM) devices, Electrical Erasable Programmable ROM (EEPROM) devices, battery backed RAM devices, and/or other non-volatile memory devices. The firmware device 240 may further store a pre-boot authentication (PBA) module 241 and Basic Input/Output System (BIOS) firmware 242. In one embodiment, execution of the PBA module 241 presents a user interface via which a password and/or other authentication data may be entered prior to streaming an operating system 142 from the OS server 140.

The BIOS firmware 242 may include a core root of trust module (CRTM) 243 and a streaming boot loader (SBLDR) 244. The BIOS firmware 242 may also be implemented according to a legacy PC BIOS interface, an Extensible Firmware Interface (EFI) as defined by the EFI Specifications, version 2.0, published January 2006, available from the Unified EFI Forum, or another platform interface such as the Open Firmware interface described by IEEE standard IEEE 1275-1994. As explained in more detail below, the boot loader 244 may request, decrypt and initiate execution of an operating system 142 streamed over the network 110 from the OS server 140. Furthermore, while depicted as part of the BIOS firmware 242, the CRTM 243 and/or the boot loader 244 may be implemented separately from the BIOS firmware 242 and may be stored in other non-volatile storage of the client 120 such as, for example, non-volatile storage of the chipset 220, the system memory 230, management engine 250, TPM 260, I/O devices 270, mass storage device 280 and/or network interface controller 290.

The TPM 260 may include protected storage 261, platform configuration registers (PCRs) 265, a random number generator (RNG) 266, a cryptographic hashing engine 267, an encryption engine 268 and an interface 269. FIG. 2 depicts the TPM 260 as being external to the management engine 250. However, in some embodiments, the management engine 250 and the TPM 260 may be part of the same integrated circuit and/or component.

The protected storage 261 of the TPM 260 may include random-access memory and/or read-only memory. The read-only memory may be populated with a storage root key (SRK) 262 and an endorsement key (EK) 263 at the time of manufacture, and such read-only memory may be potted, or otherwise secured in a tamper resistant manner. The storage root key 262 in one embodiment comprises an asymmetric key pair such as Rivest Shamir, Adleman (RSA) public key and an RSA private key that may be used to encrypt other keys stored outside the TPM 260. The random-access memory may also store attestation identity keys (AIK) 264 as well as other loaded keys and secrets.

Moreover, the TPM 260 may require receipt of appropriate authentication data for the storage root key 262 and/or other keys of the TPM 260 before the TPM 260 permits use of the key. In one embodiment, a user may provide the TPM 260 authentication data for the storage root key 262 and/or other keys of the TPM 260 via the PBA module 241 in order to permit use of such keys prior to receiving an operating system 142 from the OS server 140.

The PCRs 265 may store various hash values during initialization and verification of the client 120. In one embodiment, the TPM 260 includes sixteen (16) PCRs 265 to store platform configuration measurements which are based upon cryptographic hashes of entities (e.g. applications) executed by the client 120. In one embodiment, the TPM 260 does not permit the PCRs 265 to be directly written. Instead, the TPM 260 supports an extend operation of a targeted PCR 265 in which a new measurement value is concatenated with the current value of the targeted PCR 265 and then hashed via the hashing engine 267. The TPM 260 then stores the resulting hashed value in the targeted PCR 265.

The RNG 266 may assist the encryption engine 268 in key generation by providing the encryption engine 268 with a source of entropy. The RNG 266 may also provide nonce values that may help prevent replay attacks.

In one embodiment, the cryptographic hashing engine 267 may generate a cryptographic hash value of a received message based upon a Secure Hash Algorithm (SHA) hashing algorithm. The cryptographic hashing engine 267, however, in other embodiments may generate hash values using other or additional cryptographic hashing algorithms.

The encryption engine 268 in one embodiment may generate symmetric encryption keys and/or asymmetric encryption key pairs. The encryption engine 268 may further encrypt data using a symmetric encryption key or a public encryption key of an asymmetric encryption key pair and may decrypt data using a symmetric encryption key or a private encryption key of an asymmetric encryption key pair. In one embodiment, the encryption key engine 268 generates asymmetric key pairs and encrypts/decrypts data in accordance with the asymmetric RSA cryptographic algorithm. In other embodiments, the encryption engine 268 may generate keys and encrypt/decrypt data using other asymmetric cryptographic algorithms and/or symmetric cryptographic algorithms.

The mass storage device 280 may include floppy disk drives, hard drive disks, compact disk drives, and digital versatile disk (DVD) drives to store data and/or coded instructions. In one embodiment, the client 120 does not maintain persistent local copies of remotely stored operating systems 142 or applications 143. Accordingly, the client 120 may be implemented without the depicted mass storage device 280. However, even though persistent local copies of an operating system 142 and/or applications 143 are not locally maintained, the client 120 may still receive benefit from having a mass storage device 280. For example, the client 120 may use the storage device 120 as virtual memory, thus effectively increasing the storage capacity of the system memory 230. The client 120 may also use the mass storage device 280 as a network cache in order to maintain locally cached, non-persistent copies of an operating system 142, applications 143 or portions thereof to provide quicker access to such cached instructions. In such embodiments, the client 120 may implement the virtual memory and network cache such that their contents are not usable across system reboots and/or system power-offs.

The manageability engine 250 may employ the TPM interface 269 to invoke various services of the TPM 260. For example, the management engine 250 may request the TPM 260 to generate/store security keys, wrap/unwrap keys, seal/unseal data, encrypt/decrypt data, and/or measure/verify integrity of components of the client 120. The management engine 250 may execute independently of the processor 210, thus permitting the management engine 250 to perform various cryptographic, measurement and verification processes with the aid of the TPM 260 while the processor 210 remains halted or executes other instructions. In one embodiment, the management engine 102 may request the TPM 260 to measure and verify the integrity of an executable component or entity, and may halt or otherwise prevent the execution of such an entity if the TPM 260 is unable to verify the integrity of the entity. In particular, the hashing engine 267 of the TPM 260 may calculate a hash value of a software program to obtain a measurement of the entity, and the TPM 260 may verify the calculated hash corresponds to an expected hash value for the entity. In one embodiment, the expected values may have been provisioned and stored in protected storage 262 of the TPM 260 via the provisioning server 130 or some other manner.

The network controller 290 may provide an interface to the network 110 and to the computing devices and network devices connected to the network 110 such as the provisioning server 130 and the OS server 140. The network controller 290 also may include a management agent (MA) 292 to perform cryptographic processes and/or execute the boot loader 244. In addition, the management agent 292 may include an interface that allows system software (e.g., BIOS software, pre-operating system software, runtime management mode software, etc.) to perform cryptographic processes on behalf of the system software. The management agent 292 may operate independently of the operation of the processor 210. For example, the management agent 292 may include a microprocessor, a microcontroller or other type of processor circuitry, memory, and interface logic.

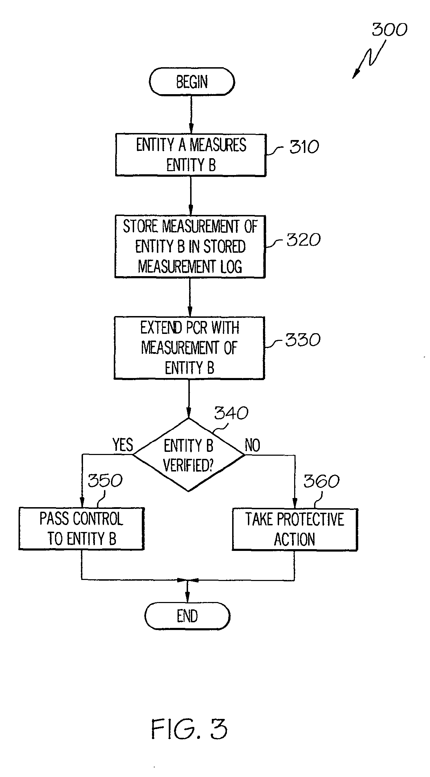

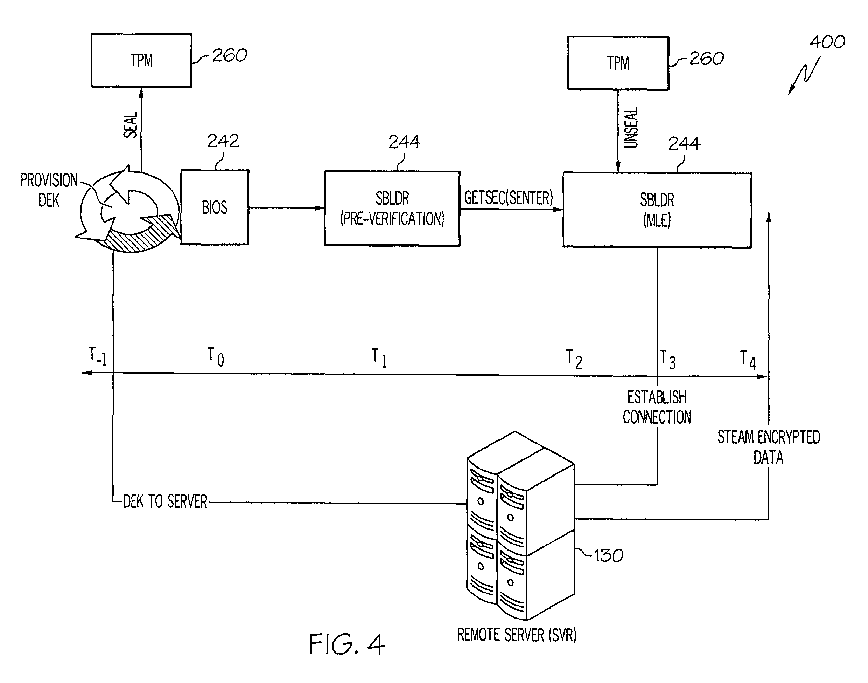

As mentioned above, the firmware device 240 may include a core root of trust module (CRTM) 243. The CRTM 243 may comprise a block of code that may serve as a genesis of trust for integrity measurements. In one embodiment, the CRTM 243 reliably measures integrity values of other entities and stays unchanged during the lifetime of the platform. The CRTM 243 executes before other parts of the firmware device 240 in order to measure the PBA module 241, the BIOS firmware 242 or portions thereof before passing control to the BIOS firmware 242 or portions thereof. The process of extending a chain of trust from the CRTM 243 to a running operating system 142 is explained in more detail below in regard to FIG. 4. However, in order to better appreciate the description of FIG. 4, the process of measuring integrity and extending trust will be described in relation to FIG. 3.

As shown in FIG. 3, an embodiment of an integrity measurement method 300 may begin at block 310 with entity A (e.g. a portion of the BIOS firmware 242) measuring entity B (e.g. another portion of the BIOS firmware 242) to obtain a measurement or fingerprint of entity B. In particular, entity A may generate the measurement of entity B, by performing a cryptographic hash (e.g. a SHA-1 hash) of entity B. Then, entity A may store at block 320 the measurement for entity B in a stored measurement log (SML) 232 outside of the TPM 260. For example, the entity A may store the stored measurement log 232 in system memory 230 or mass storage device 280. At block 330, entity A may insert the measurement of entity B into a PCR 265 of the TPM 260 via an extend operation. At block 340, entity A may determine whether entity B is trustworthy. In one embodiment, entity A may determine that it is unable to verify that entity B is trustworthy if the measurement of entity B does not correspond to an expected measurement value for entity B. In one embodiment, entity A may consult a manifest 234 stored outside the TPM 260 to obtain the expected value for the entity B or may simply have the expected value hard coded therein. If entity A determines that entity B is trustworthy, then entity A may pass control to entity B at block 350. If entity A is unable to verify that entity B is trustworthy, then entity A at block 360 may take some protective action such as, for example, halt the client 120, reset the client 120, shutdown the client 120, and/or prompt a user of the client 120 whether the client 120 should continue.

Entity B may then repeat the process in order to verify the integrity entity C, and entity C may perform the process in order to verify the integrity of entity D, and so on. At any point, this chain of trust may be broken if an entity determines that a measurement for a subsequent entity to which control is to be past does not correspond to an expected, trusted, or previously verified measurement.

As mentioned above, the network environment 100 permits a client 120 to boot an operating system 142 over the network 100 in a protected manner. Referring now to FIG. 4, an embodiment of a method 400 of booting an operating system 142 over a network 100 is shown in a timeline form. During key provisioning time T₋₁, encryption keys DEK1, DEK2 to encrypt and decrypt operating systems 142 of the OS server 140 may be provisioned to the client 120 and the OS server 140. In one embodiment, the TPM 260 of the client 120 may generate an asymmetric encryption key pair comprising a private key 122 and a public key 144. The TPM 260 may further seal the private key 122 of the generated key pair to a verified measured launch environment (MLE) of the client 120.

The verified measured launch environment specifies a measured platform configuration as defined by the contents of one or more PCRs 265 which has been verified to be trustworthy. As a result of sealing the data encryption key 122 to the verified measured launch environment, the TPM 260 may only unseal the sealed data encryption key 122 if the platform configuration of the client 120 corresponds to the verified measure launch environment at the time of receiving a request to unseal the sealed data encryption key 122. The contents of the PCRs 265 may include measurements of the PBA module 241, BIOS firmware 242, as well as other hardware and/or software components of the client 120. Thus by specifying PCRs 265 of the TPM 260, the measure launch environment may identify a trustworthy PBA module 241, BIOS firmware 242, as well as other hardware and/or software components of the client 120. If the measured launch environment, CRTM 243 and/or BIOS firmware 242 verify the integrity of the pre-boot environment, the data encryption key 122 need not be sealed to every code module that may exist in the pre-boot environment. Selectively sealing the data encryption key 122 to aspects of the client 120 may permit easier recovery from exceptional cases and may lower the total cost of ownership for information technology departments who service help desk calls each time unsealing the data encryption key 122 breaks.

During the key provisioning (T₋₁), the corresponding public keys 144 may also be provided to the OS server 140. The OS server 140 may store received data encryption keys 142 such that appropriate data encryption keys 144 may be retrieved and used when streaming operating systems 142 to clients 120.

In one embodiment, the provisioning server 130 with the aid of the management engine 250 may be used to provision the keys 122, 144 to the clients 120 and the OS server 140. However, other provisioning methods may be employed. For example, a technician may physically visit each client 120 and run a setup routine of the BIOS firmware 242 that results in the creation of the keys 122, 144 and the storage of the keys 144 on a removable storage device. The technician may later physically visit the OS server 140 and transfer the keys 144 from the removable storage device to the OS server 140. Such an provisioning method may permit provisioning of the keys 122, 144 while the clients 120 and OS server 140 are disconnected from the network 110.

In response to a boot event (e.g. system reset, system power-up, etc.), the client 120 at time T₀ may initiate a boot process and verify the integrity of the BIOS firmware 242. In particular, the client 120 with the aid of the management engine 250 and the TPM 260 may execute the CRTM 243 and create a chain of trust from the CRTM 243 to the BIOS firmware 242 as explained above in regard to the integrity measurement method 300 of FIG. 3. The extension of trust from the CRTM 243 results in the measurement of the BIOS firmware 242 and any routines that may have been verified and executed between the CRTM 243 and the BIOS firmware 242. In particular, the verification process results in measurements of the BIOS firmware 242 and any intermediate entities, verifying that measurements are as expected, storing the measurements in the security measurement log 232, and extending one or more PCRs 265 of the TPM 260 with the obtained measurements.

Assuming the client 120 was able to verify the BIOS firmware 242, the BIOS firmware 242 at time T₁ may verify and execute the boot loader 244 thus extending trust from the BIOS firmware 242 to the boot loader 244. Again, the verification process results in a measurement of the boot loader 244, verifying that the measurement is as expected, storing the measurement in the security measurement log 232, and extending one or more PCRs 265 based upon the measurement. The boot loader 244 at time T₁ may further place the client 120 in a protected virtualization mode (VMX). In one embodiment, the boot loader 244 may call GETSEC SENTER instructions of the Trusted execution Technology supported by the processor 210 to place the client in the protected virtualization mode (VMX).

After entering the protected virtualization mode, the boot loader 244 at time T₂ may request the TPM 260 to unseal the data encryption key 122. As mentioned above, the data encryption key 122 during the key provisioning process was sealed to the verified measured launch environment. Accordingly, if the measurements stored by the PCRs 265 do not correspond to the measured launch environment to which the data encryption key 122 was sealed, the TPM 260 will not unseal the data encryption key 122. In which case, the boot loader 244 may take some protective action such as, resetting the client 120, powering down the client 120, or otherwise halting the boot process. On the other hand, if the measurements stored by the PCRs 265 indicate the client 120 has a platform configuration that corresponds to the measured launch environment to which the data encryption key 122 was sealed, then the TPM 260 may unseal the data encryption key 122 and provide the unsealed key 122 to the boot loader 244.

At time T₃, the verified boot loader 244 may initiate contact with the OS server 140 in order to obtain an operating system 142 to execute. To this end, the boot loader 244 may authenticate itself to the OS server 140. In response to a successful authentication, the OS server 140 may retrieve the data encryption key 144 associated with the client 120 and may begin streaming encrypted operating system data to the client 120 using the data encryption key 144 associated with the client 120. In one embodiment, the client 120 may locate, authenticate and receive the encrypted operating system 142 from the OS server 140 using a networking protocol similar to the Preboot Execution Environment (PXE) specification v2.1 on September 20, 1999 by Intel Corporation; however, other networking protocols for booting an operating system over a network may also be appropriate.

The verified boot loader 244 at time T₄ may decrypt the received operating system 142 using the unsealed key 122, and may invoke execution of the operating system 142. Even if a rogue client 120 with an unverified boot loader 244 is able to authenticate itself to the OS server 140 and retrieve an operating system 142, the client 120 still will not be able to execute the received operating system 142. Such a rogue client 120 will either not have an appropriate key 122 or will be unable to unseal the appropriate key 122 needed in order to decrypt the received operating system 142. In this manner, the networking environment 100 provides additional protection that aims to prevent such rogue clients 120 gaining accesses to and executing decrypted operating systems 142 of the OS server 140.

The above method 400 of booting an operating system over a network is merely exemplary and that other embodiments within the spirit of the disclosure and attached claims are contemplated. For example, the protected network boot may use symmetric keys instead of the asymmetric keys 122, 144 detailed above. In such an embodiment, the client 120 during key provisioning may generate a symmetric key as well as an asymmetric key pair. The client 120 may use the asymmetric key pair to seal the symmetric key to a particular configuration of the client 120. Thus, in such an embodiment, the OS server 140 may use the symmetric key to encrypt the operating system 142 and the client 120 may use the same symmetric key to decrypt the operating system 142 after successfully unsealing the key under the proper platform configuration.

In yet another embodiment, instead of provisioning keys 122, 144 to decrypt/encrypt the operating system 142, a secret (e.g. data, encryption key, signed certificate, etc.) may be provisioned and sealed to the client 120 so that the client 120 may only unseal the secret while the client 120 is in a specified configuration. The sealed secret may be used by the client 120 to obtain a symmetric or asymmetric session key from the OS server 140 during the authentication process of time T₃. In particular, the OS server 140 may authenticate the client 120 based at least in part upon the client 120 having the secret. In such an embodiment, the sealed secret used during session negotiation may be removed from memory 230 prior to receiving the operating system 142 in order to further protect the sealed secret. In such an embodiment, the OS server 140 may encrypt the operating system 142 based upon the negotiated session key and the client 120 may use the session key to decrypt the received operating system 142.

While the disclosure has been illustrated and described in detail in the drawings and foregoing description, such an illustration and description is to be considered as exemplary and not restrictive in character, it being understood that only illustrative embodiments have been shown and described and that all changes and modifications that come within the spirit of the disclosure are desired to be protected.

## Claims

1. A method for a client computing device to boot an operating system provided by a server computing device, comprising
receiving authentication data for a sealed encryption key,
requesting a trusted platform module of the client computing device to unseal the sealed encryption key based upon the received authentication data,
receiving an encrypted operating system via a network in response to initiating a boot process of the client computing device,
decrypting the encrypted operating system received via the network using an unsealed encryption key obtained in response to requesting the trusted platform module to unseal the sealed encryption key, and
executing the decrypted operating system.

2. The method of claim 1 further comprising aborting the boot sequence of the client computing device in response to the trusted platform module determining not to unseal the sealed encryption key.

3. The method of claim 1 further comprising requesting the trusted platform module to create the sealed encryption key by sealing an encryption key to a verified measured launch environment of the client computing device.

4. The method of claim 3 further comprising in response to requesting the trusted platform module to unseal the sealed encryption key, unsealing the sealed encryption key only if the client computing device has a platform configuration that corresponds to the verified measured launch environment to which the encryption key was sealed.

5. The method of claim 1 further comprising
requesting the trusted platform module to create the sealed encryption key by sealing a private asymmetric encryption key of an asymmetric encryption key pair to a verified measured launch environment of the computing device, and
in response to requesting the trusted platform module to unseal the sealed encryption key, unsealing the sealed encryption key to obtain the private encryption key only if the client computing device has a platform configuration that corresponds to the verified measured launch environment to which the encryption key was sealed, wherein
decrypting the encrypted operating system comprises decrypting the encrypted operating system using the private asymmetric encryption key obtained from the unsealed encryption key.

6. The method of claim 1, further comprising
creating a symmetric encryption key and an asymmetric encryption key,
sealing the symmetric encryption key to a verified measured launch environment using the asymmetric encryption key to obtain the sealed encryption key, and
in response to requesting the trusted platform module to unseal the sealed encryption key, unsealing the sealed encryption key to obtain the symmetric encryption key only if the computing device has a platform configuration that corresponds to the verified measured launch environment to which the symmetric encryption key was sealed, wherein
decrypting the encrypted operating system comprises decrypting the encrypted operating system using the symmetric encryption key obtained from the unsealed encryption key.

7. A machine readable medium, comprising a plurality of instructions that, in response to being executed, results in a client computing device, to perform the methods steps of any one of claim 1-6.

8. The machine readable medium of claim 7, wherein the plurality of instructions further results in the client computing device,
requesting a trusted platform module of the client computing device to unseal a secret that had been sealed to a specified platform configuration for the client computing device, and
negotiating with the server computing device based upon the secret to obtain a session key to be used as the encryption key.

9. The machine readable medium of claim 8, wherein the plurality of instructions further results in the client computing device, removing the secret from a memory of the client computing device prior to receiving the encrypted operating system.

10. The machine readable medium of claim 8, wherein the plurality of instructions further results in the client computing device, aborting a boot sequence if the trusted platform module does not unseal the secret.

11. A system to protect an operating system booted over a network, comprising a client computing device, the client computing device comprising
a firmware device comprising one or more entities, each entity comprising one or more instructions,
a trusted platform module to store measurements and verify integrity of entities to be executed, and
a processor to execute the one or more entities of the firmware device, wherein
the one or more entities in response to being executed result in the client computing device obtaining an encryption key, sending a request for an operating system to the network, receiving an encrypted operating system from the network, decrypting the encrypted operating system using the encryption key, and executing the decrypted operating system.

12. The system of claim 11, wherein the one or more entities include a boot loader that in response to being executed results in the client computing device
requesting the trusted platform module to unseal the encryption key, and
aborting a boot sequence of the client computing device in response to the trusted platform module determining that the client computing device does not have a platform configuration to which the encryption key was sealed.

13. The system of claim 11, further comprising a server computing device, wherein
the one or more entities include a boot loader that in response to being executed results in the client computing device requesting the trusted platform module of the client computing device to unseal a secret that had been sealed to a specified platform configuration for the client computing device, and negotiating with the server computing device based upon the secret to obtain a session key to be used as the encryption key, and
the server computing device is to provide the client computing device with the session key and to encrypt the operating system with a corresponding session key in response to authenticating the client computing device based at least upon the secret.

14. The system of claim 13, wherein execution of the boot loader further results in the client computing device removing the secret from a memory of the client computing device prior to receiving the encrypted operating system.

15. The system of claim 14, wherein execution of the boot loader further results in the in the client computing device aborting a boot sequence if the trusted platform module does not unseal the secret.

16. The system of claim 11, further comprising a server computing device to store the operating system, to retrieving a corresponding encryption key for the client computing device in response to receiving the request for the operating system, to encrypt the operating system using the corresponding encryption key, and to stream the encrypted operating system to the client computing device via the network.

17. The system of claim 11, further comprising a server computing device to store the operating system, to retrieve a corresponding encryption key for the client computing device in response to receiving the request for the operating system, to encrypt the operating system using the corresponding encryption key, to stream the encrypted operating system to the client computing device via the network, and to authenticate the client computing device prior to streaming the encrypted operating system.
